# EUROPEAN PATENT APPLICATION

(11) **EP 2 857 104 A1**
(43) Date of publication of application: **08.04.2015**
(21) Application number: 12878029.3
(22) Date of filing: 29.05.2012
(51) Int. Cl.: B03C 3/02, B03C 3/41, B03C 3/49, B03C 3/68, F01N 3/01, F01N 3/02, F01N 3/033, F01N 3/037

(54) **PARTICULATE MATTER TREATING DEVICE**

(71) Applicant: Toyota Jidosha Kabushiki Kaisha, Toyota-shi, Aichi 471-8571 (JP)
(72) Inventor: MITANI, Shinichi, Toyota-shi Aichi 471-8571 (JP); NOMURA, Hiroshi, Toyota-shi Aichi 471-8571 (JP)
(74) Representative: Intès, Didier Gérard André
(86) International application number: PCT/JP2012/063735
(87) International publication number: WO 2013/179381

(57) **Abstract**

Aggregation of the particulate matter is facilitated. A particulate matter processing apparatus (1) comprises an electrode (5) which is provided in an exhaust gas passage (3) of an internal combustion engine, which extends from a wall surface of the exhaust gas passage (3) toward an inner side of the exhaust gas passage (3), which is bent at a bent portion (51) toward an upstream side or a downstream side in a flow direction (B) of an exhaust gas, and which extends toward the upstream side or the downstream side in the flow direction (B) of the exhaust gas, wherein the electrode (5) is formed so that a field intensity, which is provided between the electrode (5) and the wall surface of the exhaust gas passage (3) on the upstream side, is larger than that provided on the downstream side.

## Description

### TECHNICAL FIELD

The present invention relates to a particulate matter processing apparatus.

### BACKGROUND ART

A technique is known, wherein a discharge electrode, which has a needle-like shape, is provided for an exhaust gas passage of an internal combustion engine to electrify the particulate matter (hereinafter referred to as "PM" as well), and the electrified PM is allowed to stay on a dust collection electrode (see, for example, Patent Document 1). Further, according to this technique, the particulate diameter of PM is increased, and hence PM can be easily collected by using a filter when the filter is provided on the downstream side.

Another technique is known, wherein a discharge electrode, which is provided with a protruding portion, is arranged in an exhaust gas pipe to collect PM (see, for example, Patent Document 2).

Still another technique is known, wherein the insulation is secured for a discharge electrode in a particulate matter processing apparatus which utilizes the corona discharge (see, for example, Patent Document 3).

Still another technique is known, wherein a forward end portion of an insulating portion of a discharge electrode is thin-walled to raise the temperature by means of the heat of the exhaust gas, and PM, which adheres to the forward end portion, is oxidized (see, for example, Patent Document 4).

Still another technique is known, wherein the condensation (dew) of water is suppressed by heating a discharge unit (see, for example, Patent Document 5).

Still another technique is known, wherein three to six projecting portions having needle-like shapes are arranged in a radial form at equal intervals (equal spacings) in the circumferential direction of a discharge electrode. Further, it is assumed that D0 represents the distance from the forward end of the projecting portion to the inner surface of a duct, and P represents the installation spacing in the length direction (lengthwise direction) between the discharge electrodes of the projecting portions. On this assumption, the relationship between the both is set to be in a range of 0.6D0 ≤ P ≤ 2.4D0 (see, for example, Patent Document 6).

Still another technique is known, wherein D/5 ≤ P ≤ D is given assuming that D represents the spacing between counter electrodes arranged in parallel to one another, and P represents the spacing between projections provided for discharge electrodes arranged at intermediate positions of the counter electrodes (see, for example, Patent Document 7).

Further, an electric dust collector is known, in which a discharge electrode having a needle-like shape is provided in a pipe (see, for example, Patent Documents 8 and 9).

Further, a technique is known, in which PM is collected after electrifying PM by using an electrode unit provided for an exhaust gas pipe (see, for example, Patent Document 10).

In this context, if the strong electric discharge, which is exemplified, for example, by the corona discharge or the arc discharge, is generated from the electrode, PM is pulverized and made to be fine and minute by means of the high speed electrons resulting from the strong electric discharge. As a result, the effect to aggregate PM is lowered. In relation thereto, it is conceived that the application voltage is controlled so that the strong electric discharge is not generated. However, in the case of the construction of the conventional technique, the field intensity (electric field strength) is scarcely taken into consideration. Even if PM is aggregated, the effect is small.

### PRECEDING TECHNICAL DOCUMENTS

### Patent Documents:

- Patent Document 1:: JP2006-136766A;
- Patent Document 2:: JP2009-114872A;
- Patent Document 3:: JP2006-342730A;
- Patent Document 4:: JP2006-291708A;
- Patent Document 5:: JP2006-122849A;
- Patent Document 6:: JP06-031199A;
- Patent Document 7:: JP11-216388A;
- Patent Document 8:: JP2009-208041A;
- Patent Document 9:: JP2009-082901A;
- Patent Document 10:: JP09-112246A.

### SUMMARY OF THE INVENTION

### Task to Be Solved by the Invention:

The present invention has been made taking the foregoing problem into consideration, an object of which is to facilitate the aggregation of the particulate matter.

### Solution for the Task:

In order to achieve the object as described above, according to the present invention, there is provided a particulate matter processing apparatus comprising an electrode which is provided in an exhaust gas passage of an internal combustion engine, which extends from a wall surface of the exhaust gas passage toward an inner side of the exhaust gas passage, which is bent at a bent portion toward an upstream side or a downstream side in a flow direction of an exhaust gas, and which extends toward the upstream side or the downstream side in the flow direction of the exhaust gas, wherein:
the electrode is formed so that a field intensity, which is provided between the electrode and the wall surface of the exhaust gas passage on the upstream side, is larger than that provided on the downstream side.

In this arrangement, when the voltage is applied to the electrode, it is possible to electrify or electrically charge PM. The electrified PM is moved toward the wall surface of the exhaust gas passage in accordance with the Coulomb force and/or the flow of the exhaust gas. PM, which arrives at the wall surface of the exhaust gas passage, releases the electrons to the exhaust gas passage. Therefore, the electricity flows to the ground side as compared with the electrode. Further, PM, from which the electrons are released, is aggregated with other PM existing in the neighborhood. Therefore, it is possible to decrease the number of particulates.

In this context, when the field intensity (electric field strength), which is provided between the electrode and the wall surface of the exhaust gas passage, is made large on the upstream side of the flow of the exhaust gas, it is possible to electrify PM more reliably on the upstream side on which the field intensity is relatively large. Further, PM, which is electrified on the upstream side, is allowed to flow to the downstream side on which the field intensity is relatively small, and PM gently advances toward the wall surface of the exhaust gas passage in accordance with the influence of the electric field. That is, it is possible to facilitate the electrification of PM by relatively increasing the field intensity on the upstream side. On the other hand, it is enough on the downstream side that PM, which has been already electrified, is merely directed to the wall surface of the exhaust gas passage. Therefore, it is enough that the field intensity is relatively small. Therefore, it is possible to simplify the apparatus or realize a light weight of the apparatus. Further, even when the field intensity on the downstream side is made relatively small, PM is electrified on the upstream side. Therefore, it is possible to increase the opportunities of aggregation of PM. Accordingly, it is possible to reduce the number of particulates of PM.

It is also appropriate that the electrode is bent toward the upstream side in the flow direction of the exhaust gas, or the electrode is bent toward the downstream side. Further, it is also appropriate that the direction, in which the electrode extends, is not parallel to the flow direction of the exhaust gas. Further, it is also appropriate that the field intensity is decreased in a stepwise manner from the upstream side to the downstream side in the flow direction of the exhaust gas, or the field intensity is decreased continuously and gradually.

In the present invention, the particulate matter processing apparatus may further comprise:
a power source which supplies an electric power to the electrode, wherein:
   the power source can supply the electric power to one portion of the electrode to apply an identical voltage to the entire electrode.

In this way, when the field intensity is changed between the upstream side and the downstream side while supplying the power source from one portion, it is thereby possible to simplify the apparatus and the control. Further, it is necessary to provide a hole through the exhaust gas passage in order to allow the electrode to pass therethrough. However, it is enough to provide one hole. Therefore, it is possible to lower the production cost.

In the present invention, the electrode may be provided with a plurality of protruding portions which extend toward a wall surface side of the exhaust gas passage in a direction perpendicular to the flow direction of the exhaust gas at a part extending toward the upstream side or the downstream side of the flow direction of the exhaust gas; and
the field intensity between the electrode and the wall surface of the exhaust gas passage can be changed by changing at least one of a distance between the protruding portion and the wall surface of the exhaust gas passage or an installation spacing in the flow direction of the exhaust gas between the protruding portions, between the upstream side and the downstream side of the flow of the exhaust gas.

It is also appropriate that the field intensity, which is provided between the electrode and the wall surface of the exhaust gas passage, is the field intensity which is provided around the electrode. In this arrangement, the nearer the distance between the protruding portion and the wall surface of the exhaust gas passage is, the larger the field intensity is. This feature is also referred to such that the longer the protruding portion is, the larger the field intensity is. Further, the shorter the installation spacing in the flow direction of the exhaust gas between the protruding portions is, the larger the field intensity is. This feature is also referred to such that the shorter the distance between the protruding portions adjoining in the flow direction of the exhaust gas is, the larger the field intensity is. In this way, it is possible to adjust the field intensity by changing the distance between the protruding portion and the wall surface of the exhaust gas passage or the installation spacing in the flow direction of the exhaust gas between the protruding portions. Therefore, the field intensity, which is provided between the electrode and the wall surface of the exhaust gas passage, can be made large on the upstream side as compared with the downstream side by changing at least one of the distance between the protruding portion and the wall surface of the exhaust gas passage or the installation spacing in the flow direction of the exhaust gas between the protruding portions. It is also appropriate that the length of the protruding portion or the installation spacing in the flow direction of the exhaust gas between the protruding portions is changed gradually, or changed for each of the plurality of protruding portions installed in the flow direction of the exhaust gas.

In the present invention, the exhaust gas passage, which is disposed around the electrode, may have an identical inner diameter, and the field intensity between the electrode and the wall surface of the exhaust gas passage can be changed by changing at least one of a length of the protruding portion and the installation spacing in the flow direction of the exhaust gas between the protruding portions.

It is possible to shorten the distance between the forward end of the protruding portion and the wall surface of the exhaust gas passage by lengthening the protruding portion. In this arrangement, the longer the protruding portion is, the larger the field intensity is. The shorter the protruding portion is, the smaller the field intensity is. Further, it is possible to reduce the mass by shortening the protruding portion. Further, even when the protruding portion is shortened, it is possible to suppress the decrease in the field intensity by shortening the installation spacing in the flow direction of the exhaust gas between the protruding portions. Therefore, it is possible to adjust the mass of the protruding portion while securing the necessary field intensity by adjusting the length of the protruding portion and the installation spacing in the flow direction of the exhaust gas between the protruding portions. Accordingly, it is possible to suppress such a situation that the electrode is deformed and/or broken due to the mass of the protruding portion.

In the present invention, the electrode may extend from the bent portion toward the downstream side in the flow direction of the exhaust gas; and;
a length of the protruding portion may be short and the installation spacing in the flow direction of the exhaust gas between the protruding portions may be short at a portion which is disposed far from the bent portion as compared with a portion which is disposed near to the bent portion.

That is, when the length of the protruding portion is shortened on the downstream side of the flow of the exhaust gas, it is possible to reduce the mass in the vicinity of the downstream end of the electrode, i.e., in the vicinity of the forward end of the electrode. Accordingly, it is possible to reduce the magnitude of the force applied to the electrode and the attachment portion of the electrode. Therefore, it is possible to suppress, for example, the deformation of the electrode. On the other hand, when the length of the protruding portion is shortened, it is feared that the field intensity may be unnecessarily decreased. In relation thereto, it is possible to suppress the decrease in the field intensity by shortening the installation spacing in the flow direction of the exhaust gas between the protruding portions. Therefore, it is possible to facilitate the aggregation of PM, while suppressing the malfunction or breakdown of the particulate matter processing apparatus.

In the present invention, the electrode may extend from the bent portion toward the upstream side in the flow direction of the exhaust gas; and
a length of the protruding portion may be long and the installation spacing in the flow direction of the exhaust gas between the protruding portions may be long at a portion which is disposed far from the bent portion as compared with a portion which is disposed near to the bent portion.

Also in such a situation, the field intensity is large on the upstream side as compared with the downstream side. Therefore, it is possible to more reliably electrify PM on the upstream side on which the field intensity is relatively large. Therefore, it is possible to facilitate the aggregation of PM.

In the present invention, a thickness of the protruding portion can be changed between the upstream side and the downstream side of the flow of the exhaust gas.

In this arrangement, the rigidity is raised by thickening the protruding portion, but the field intensity is lowered. When the protruding portion is thickened in order to raise the rigidity, it is possible to suppress the decrease in the field intensity by shortening the installation spacing in the flow direction of the exhaust gas between the protruding portions or lengthening the protruding portion. Therefore, it is possible to change the field intensity around the electrode between the upstream side and the downstream side while securing the rigidity by changing the thickness of the protruding portion between the upstream side and the downstream side of the flow of the exhaust gas. It is also appropriate that the thickness of the protruding portion is a diameter of the cross section of a root of the protruding portion. Further, it is also appropriate that the field intensity is made relatively large, for example, by relatively thickening the protruding portion on the upstream side of the flow of the exhaust gas and shortening the installation spacing in the flow direction of the exhaust gas.

In the present invention, the particulate matter processing apparatus may further comprise:
a detecting unit which detects a current allowed to pass through the electrode;
a judging unit which judges whether or not a pulse current is generated in the current detected by the detecting unit; and
a control unit which reduces an application voltage applied to the electrode as compared with that provided at a present point in time if it is judged by the judging unit that the pulse current is generated.

Accordingly, it is possible to suppress the generation of the pulse current allowed to pass through the electrode. In this arrangement, if the strong electric discharge is generated in the electrode, the pulse current is generated in the current allowed to pass through the electrode. That is, it is considered that the strong electric discharge is generated in the electrode when the pulse current is detected by the detecting unit. It is feared that PM may be pulverized by the strong electric discharge and PM may be made fine and minute. In relation thereto, it is possible to suppress the generation of the strong electric discharge by reducing the application voltage when the pulse current is generated. It is noted that PM can be aggregated even by using an application voltage which does not generate the strong electric discharge including, for example, the corona discharge and the arc discharge. Therefore, if the generation of the pulse current is suppressed by reducing the application voltage when the pulse current is generated, then it is possible to aggregate PM while suppressing PM from being made to be fine and minute.

In the present invention, it is also appropriate that the control unit increases the application voltage as compared with that provided at a present point in time if it is judged by the judging unit that the pulse current is not generated. PM is aggregated more easily by further increasing the application voltage in a range in which the pulse current is not generated. That is, it is possible to facilitate the aggregation of PM by increasing the application voltage in the range in which the pulse current is not generated. It is also appropriate that the feedback control is performed so that the application voltage is maximized in the range in which the pulse current is not generated.

### EFFECT OF THE INVENTION

According to the present invention, it is possible to facilitate the aggregation of the particulate matter.

### BRIEF DESCRIPTION OF THE DRAWINGS

Fig. 1 shows an schematic arrangement of a particulate matter processing apparatus according to a first embodiment.
Fig. 2 shows a field intensity distribution around an electrode according to the first embodiment.
Fig. 3 shows a field intensity distribution provided when protruding portions disposed on the forward end side of the electrode are relatively shortened and protruding portions disposed in a region ranging from a bent portion to the forward end of the electrode are arranged at equal intervals (equal spacings).
Fig. 4 shows a schematic arrangement of a particulate matter processing apparatus according to a second embodiment.
Fig. 5 shows a field intensity distribution according to the second embodiment.
Fig. 6 shows a schematic arrangement of a particulate matter processing apparatus according to a third embodiment.
Fig. 7 shows a schematic arrangement of a particulate matter processing apparatus according to a fourth embodiment.
Fig. 8 shows a schematic arrangement of a particulate matter processing apparatus according to a fifth embodiment.
Fig. 9 shows an electrode of a particulate matter processing apparatus according to a sixth embodiment as viewed from the downstream side of the flow of the exhaust gas.
Fig. 10 shows a schematic arrangement of a particulate matter processing apparatus according to a seventh embodiment.
Fig. 11 shows a schematic arrangement of a particulate matter processing apparatus according to an eighth embodiment.
Fig. 12 shows a schematic arrangement of a particulate matter processing apparatus according to a ninth embodiment.
Fig. 13 shows a flow chart illustrating a control flow of an air supply unit according to the ninth embodiment.
Fig. 14 shows a schematic arrangement of a particulate matter processing apparatus according to a tenth embodiment.
Fig. 15 shows a schematic arrangement of a particulate matter processing apparatus according to an eleventh embodiment.
Fig. 16 shows the transition of the current detected by a detecting unit in relation to each of application voltages.
Fig. 17 shows a schematic arrangement of a particulate matter processing apparatus according to a twelfth embodiment.
Fig. 18 shows a schematic arrangement of a particulate matter processing apparatus according to a thirteenth embodiment.
Fig. 19 shows a schematic arrangement of a particulate matter processing apparatus according to a fourteenth embodiment.

### MODE FOR CARRYING OUT THE INVENTION

An explanation will be made below on the basis of the drawings about specified embodiments of the particulate matter processing apparatus according to the present invention. It is noted that the following embodiments can be appropriately combined with each other.

### (First embodiment)

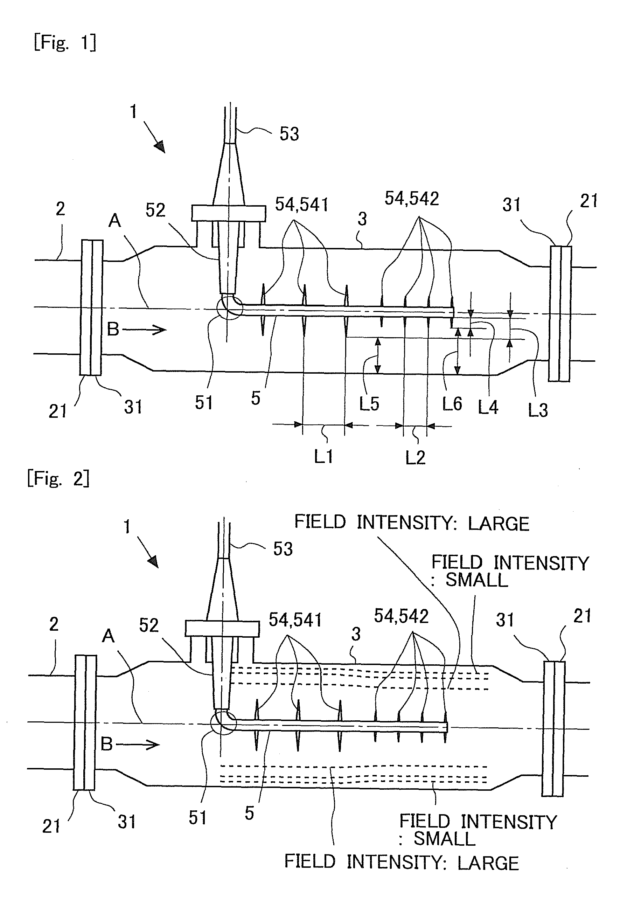

Fig. 1 shows a schematic arrangement of a particulate matter processing apparatus 1 according to this embodiment. The particulate matter processing apparatus 1 is provided, for example, for an exhaust gas passage 2 of a gasoline engine. The particulate matter processing apparatus 1 can be also provided for an exhaust gas passage of a diesel engine.

The particulate matter processing apparatus 1 is constructed to include a housing 3 which has both ends connected to the exhaust gas passage 2. A stainless steel material is used for a material of the housing 3. The housing 3 is formed to have a hollow columnar shape. Both ends of the housing 3 are formed to have tapered shapes such that the cross-sectional area of the flow passage for the exhaust gas is decreased at positions disposed nearer to the end portion. In Fig. 1, the exhaust gas flows in the direction of the arrow B through the exhaust gas passage 2. Therefore, the housing 3 may be regarded as a part of the exhaust gas passage 2. That is, the wall surface of the housing 3 can be regarded as the wall surface of the exhaust gas passage 2.

A flange 21 is formed at an end portion of the exhaust gas passage 2, and a flange 31 is formed at an end portion of the housing 3. The exhaust gas passage 2 and the housing 3 are fastened, for example, by bolts and nuts by the aid of the flange 21 disposed on the side of the exhaust gas passage and the flange 31 disposed on the side of the housing 3. An electric insulator may be provided between the flange 21 disposed on the side of the exhaust gas passage and the flange 31 disposed on the side of the housing 3.

An electrode 5 having a circular cross section is attached to the housing 3. It is also allowable that the cross-sectional shape of the electrode 5 is any other shape including, for example, a polygonal shape. The electrode 5 penetrates through the side surface of the housing 3. The electrode 5 extends from the side surface of the housing 3 in the direction of the central axis A of the housing 3, and the electrode 5 is bent toward the downstream side of the flow of the exhaust gas at a bent portion 51 in the vicinity of the central axis A. The electrode 5 extends toward the downstream side of the flow of the exhaust gas in parallel to the central axis A. Therefore, in this embodiment, the central axis of the electrode 5 disposed on the downstream side from the bent portion 51 is the same as the central axis A of the housing 3.

Further, an insulator portion 52, which is composed of an electric insulator, is provided for the electrode 5 so that the electricity does not flow between the electrode 5 and the housing 3 at the portion at which the electrode 5 penetrates through the housing 3. The insulator portion 52 is positioned between the electrode 5 and the housing 3. The insulator portion 52 insulates the electricity, and the insulator portion 52 fixes the electrode 5 to the housing 3.

A plurality of protruding portions 54, which extend toward the side surface of the housing 3 perpendicularly to the central axis A, are provided on the downstream side of the flow of the exhaust gas from the bent portion 51. The protruding portion 54 is formed to have a needle-like shape. The plurality of protruding portions 54 are formed while providing spacings from the upstream side to the downstream side of the flow of the exhaust gas. Further, the plurality of protruding portions 54 are provided, for example, at equal angles around the central axis A about the center of the central axis A. It is also allowable that the plurality of protruding portions 54 are provided in a radial form about the center of the central axis A. The housing 3, which is disposed around the protruding portions 54, has the constant inner diameter.

In this embodiment, the protruding portion 542, which is provided on the relatively downstream side, has the length that is shorter than the length of the protruding portion 541 which is provided on the relatively upstream side. Further, in the case of the protruding portions 541 which are provided on the upstream side, the installation spacing in the flow direction of the exhaust gas between the protruding portions 541 is relatively long. In the case of the protruding portions 542 which are provided on the downstream side, the installation spacing in the flow direction of the exhaust gas between the protruding portions 542 is relatively short.

As shown in Fig. 1, for example, the protruding portions 541 (hereinafter referred to as "upstream side protruding portions 541" as well), which include the first to third protruding portions 541 as counted in the flow direction of the exhaust gas from the protruding portion 541 disposed near to the bent portion 51, have the length that is longer than the length of the protruding portions 542 which are disposed on the downstream side therefrom (hereinafter referred to as "downstream side protruding portion 542" as well). That is, the length L3 of the upstream side protruding portion 541 is longer than the length L4 of the downstream side protruding portion 542. Accordingly, the distance L5, which ranges from the forward end of the upstream side protruding portion 541 to the wall surface of the housing 3, is shorter than the distance L6 which ranges from the forward end of the downstream side protruding portion 542 to the wall surface of the housing 3. It is also allowable that the length of the protruding portion 54 is the distance from the central axis A to the forward end of the protruding portion 54. Alternatively, it is also allowable that the length of the protruding portion 54 is the length from the root of the protruding portion 54 to the forward end.

It is also allowable that the length of the protruding portion 542 existing in a region of not less than a predetermined distance from the bent portion 51 is shorter than the length of the protruding portion 541 existing in a region of less than the predetermined distance from the bent portion 51. All of the lengths of the protruding portions 541 existing in the region of less than the predetermined distance from the bent portion 51 may be identical with each other. Alternatively, the lengths of the protruding portions 541 existing in the region of less than the predetermined distance from the bent portion 51 may be shortened at positions disposed on the more downstream side of the flow of the exhaust gas. Further, all of the lengths of the protruding portions 542 existing in the region of not less than the predetermined distance from the bent portion 51 may be identical with each other. Alternatively, the lengths of the protruding portions 542 existing in the region of not less than the predetermined distance from the bent portion 51 may be shortened at positioned disposed at the more downstream side of the flow of the exhaust gas.

Further, as shown in Fig. 1, the installation spacing L1 in the flow direction of the exhaust gas between the upstream side protruding portions 541 is longer than the installation spacing L2 in the flow direction of the exhaust gas between the downstream side protruding portions 542.

It is also allowable that the spacing in the flow direction of the exhaust gas between the protruding portions 542 existing in the region of not less than the predetermined distance from the bent portion 51 is shorter than the spacing in the flow direction of the exhaust gas between the protruding portions 541 existing in the region of less than the predetermined distance from the bent portion 51. Further, it is also allowable that the longer the protruding portion 54 is, the longer the spacing in the flow direction of the exhaust gas is.

The electrode 5 is connected to a power source via an electric wire 53. That is, the electrode 5 is connected to the power source via the electric wire 53 at one portion. The power source can apply the electricity to the electrode 5, and the power source can change the application voltage. Further, the housing 3 is electrically grounded.

In the particulate matter processing apparatus 1 constructed as described above, the negative DC high voltage is applied from the power source to the electrode 5, and thus the electrons are released from the electrode 5. That is, the electrons are released from the electrode 5 by lowering the electric potential of the electrode 5 as compared with the housing 3. Thus, PM contained in the exhaust gas can be negatively electrified by the electrons. Negatively electrified PM is moved in accordance with the Coulomb force and the gas flow. Then, when PM arrives at the housing 3, the electrons, with which PM has been negatively electrified, are released to the housing 3. PM, from which the electrons have been released to the housing 3, are aggregated, and the particulate diameter is increased. Further, the aggregation of PM reduces the number of particulates of PM. That is, the particulate diameter of PM can be increased and the number of particulates of PM can be reduced by applying the voltage to the electrode 5.

Further, the length of the protruding portion 542 disposed on the downstream side of the flow of the exhaust gas is shorter than that of the protruding portion 541 disposed on the upstream side of the flow of the exhaust gas. Therefore, it is possible to reduce the mass on the forward end side of the electrode 5, i.e., on the downstream end side of the electrode 5. Accordingly, it is possible to decrease the bending moment generated in the electrode 5, and hence it is possible to suppress the breakage and the deformation of the electrode 5.

Fig. 2 shows a field intensity distribution around the electrode 5 according to this embodiment. Broken lines shown in Fig. 2 indicate the field intensity distribution. The field intensity (electric field strength) is large in the vicinity of the central axis A of the housing 3, and the field intensity is decreased at positions separated farther from the central axis A.

In the meantime, as the spacing between the protruding portions 54 is more shortened, the range, in which the field intensity is large, is more spread in the radial direction of the housing 3. Further, as the length of the protruding portion 54 is more lengthened, the range, in which the field intensity is large, is more spread in the radial direction of the housing 3. Therefore, when the protruding portion 542, which is disposed on the downstream side of the flow of the exhaust gas, is relatively shortened, the field intensity, which is provided on the forward end side of the electrode 5, is relatively decreased thereby. In relation thereto, it is possible to suppress the decrease in the field intensity by shortening the spacing in the flow direction of the exhaust gas between the protruding portions 542 disposed on the forward end side of the electrode 5. That is, it is possible to suppress a situation in which the field intensity is excessively decreased on the forward end side of the electrode 5.

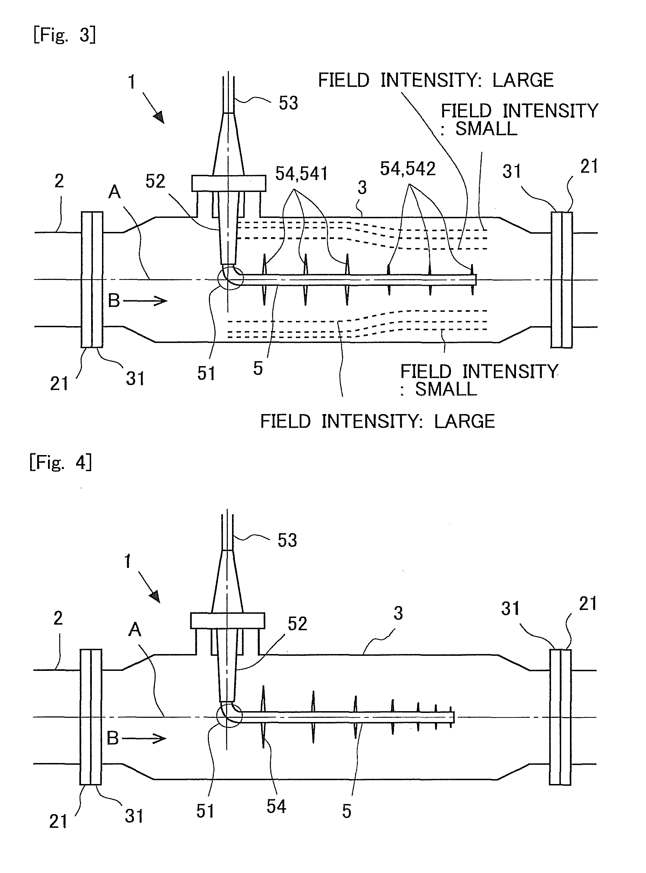

In this context, Fig. 3 shows the field intensity distribution provided when the protruding portions 54 disposed on the forward end side of the electrode 5 are relatively shortened, and the protruding portions 54 are arranged at equal intervals (equal spacings) in the region ranging from the bent portion 51 to the forward end of the electrode 5. As shown in Fig. 3, when all of the spacings between the protruding portions 54 are identical in the region ranging from the bent portion 51 to the forward end of the electrode 5, the field intensity is greatly lowered on the forward end side of the electrode 5. Therefore, the force, which is exerted to direct or move PM toward the wall surface of the housing 3, is excessively decreased, and it is difficult to aggregate PM.

On the other hand, when the spacing between the protruding portions 54 is shortened in conformity with the shortening of the length of the protruding portion 54, it is possible to suppress the excessive decrease in the field intensity. Therefore, it is possible to facilitate the aggregate of PM. The length of the upstream side protruding portion 541 and the installation spacing in the flow direction of the exhaust gas between the upstream side protruding portions 541 are set in such ranges that PM contained in the exhaust gas can be electrified. The ranges can be determined, for example, by an experiment. On the other hand, the length of the downstream side protruding portion 542 and the installation spacing in the flow direction of the exhaust gas between the downstream side protruding portions 542 are set in such ranges that PM can be directed toward the wall surface of the housing 3. The ranges can be also determined, for example, by an experiment.

As explained above, according to this embodiment, the field intensity around the upstream side protruding portion 541 can be made larger than the field intensity around the downstream side protruding portion 542. Accordingly, it is possible to electrify PM more reliably around the upstream side protruding portion 541 for which the field intensity is relatively large. Further, when PM, which is electrified around the upstream side protruding portion 541, is allowed to flow to the downstream side on which the field intensity is relatively small, PM is gently moved toward the wall surface of the housing 3. That is, even when the field intensity is decreased on the downstream side, the aggregation between PM is facilitated. Therefore, it is possible to enhance the effect to reduce the number of particulates of PM.

Further, when the downstream side protruding portion 542 is made shorter than the upstream side protruding portion 541, and the spacing in the flow direction of the exhaust gas between the downstream side protruding portions 542 is made shorter than the spacing in the flow direction of the exhaust gas between the upstream side protruding portions 541, then it is thereby possible to reduce the mass of the downstream side protruding portion 542. Further, it is possible to suppress the excessive decrease in the field intensity on the downstream side. According to the features as described above, it is possible to facilitate the aggregation of PM, while suppressing the malfunction or breakdown of the particulate matter processing apparatus 1. Further, it is possible to decrease the number of particulates of PM. Further, when the mass is reduced in the vicinity of the forward end portion of the electrode 5, the breakage and the deformation are suppressed, even when the electrode 5 is supported at one portion. Therefore, it is enough that the insulator portion 52 is provided at one portion as well. Therefore, it is possible to reduce the production cost as compared with such a situation that the electrode 5 is supported at two or more portions. Further, it is enough that the power source supplies the electric power to one portion of the electrode 5, and the identical voltage is applied to the entire electrode 5. Therefore, it is also possible to reduce the production cost by means of this feature.

### (Second embodiment)

Fig. 4 shows a schematic arrangement of a particulate matter processing apparatus 1 according to this embodiment. Components or parts, which are the same as those of the embodiment described above, are designated by the same reference numerals, any explanation of which will be omitted. As for protruding portions 54 according to this embodiment, the lengths are shorter at positions disposed on the more downstream side of the flow of the exhaust gas. Accordingly, it is possible to decrease the mass of the protruding portion 54 at positions farther from the bent portion 51. Thus, it is possible to decrease the mass on the forward end side of the electrode 5.
Therefore, it is possible to decrease the bending moment generated in the electrode 5. Therefore, it is possible to improve the reliability.

Further, in this embodiment, the spacing in the flow direction of the exhaust gas between the protruding portions 54 is shorter on the more downstream side of the flow of the exhaust gas. That is, the shorter the length of the protruding portion 54 is, the shorter the spacing between the protruding portions 54 is. For example, it is also appropriate that the lengths of the respective protruding portions 54 are set so that the forward ends of the other protruding portions 54 are positioned on a line to connect the forward end of the most upstream protruding portion 54 and the forward end of the most downstream protruding portion 54.

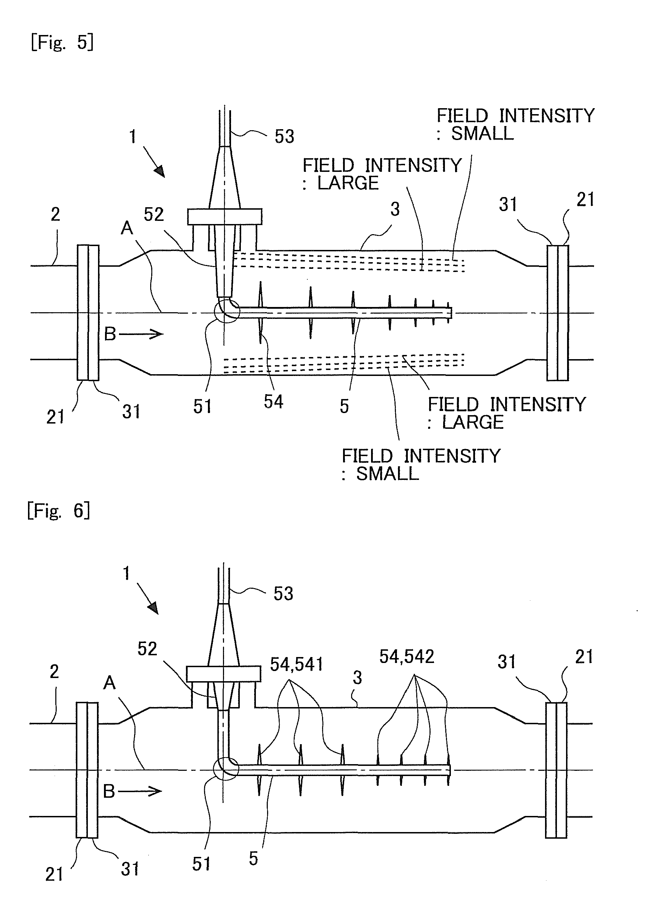

In this context, Fig. 5 shows a field intensity distribution according to this embodiment. Broken lines shown in Fig. 5 indicate the field intensity distribution. In this way, the field intensity is more uniformized as compared with the case shown in Fig. 2 or Fig. 3. Therefore, it is possible to facilitate the aggregation of PM.

Further, in the particulate matter processing apparatus 1 according to this embodiment, it is possible to reduce the mass of the protruding portion 54 disposed on the downstream side. Further, it is possible to suppress such a situation that the field intensity is excessively decreased on the downstream side. According to the features as described above, it is possible to facilitate the aggregation of PM, while suppressing the malfunction or breakdown of the particulate matter processing apparatus 1. Therefore, it is possible to decrease the number of particulates of PM.

### (Third embodiment)

Fig. 6 shows a schematic arrangement of a particulate matter processing apparatus 1 according to this embodiment. Components or parts, which are the same as those of the embodiment described above, are designated by the same reference numerals, any explanation of which will be omitted. As for an insulator portion 52 according to this embodiment, the protruding amount protruding into the exhaust gas is decreased as compared with the embodiment described above. For example, it is also appropriate that the protruding amount is necessary and minimum to secure the insulation of the electricity. The protruding amount is the protruding amount ranging from the wall surface of the housing 3. It is also appropriate that the protruding amount resides in the distance ranging from the wall surface of the housing 3 to the forward end of the insulator portion 52.

In this way, when the protruding amount of the insulator portion 52 protruding into the exhaust gas is decreased, it is thereby possible to suppress the sudden change of the temperature of the insulator portion 52. If the insulator portion 52 greatly protrudes into the exhaust gas, the temperature of the insulator portion 52 is suddenly changed, for example, when the fuel cut is carried out after the internal combustion engine is operated at the maximum output. Further, when the water contained in the exhaust gas is condensed to form water droplets which are allowed to adhere to the insulator portion 52, the temperature of the insulator portion 52 is also suddenly changed. If the temperature of the insulator portion 52 is suddenly changed as described above, it is feared that the insulator portion 52 may be broken.

On the contrary, it is possible to suppress, for example, the adhesion of water droplets by decreasing the protruding amount of the insulator portion 52 protruding into the exhaust gas as far as possible. Therefore, it is possible to suppress the sudden change of the temperature of the insulator portion 52. Accordingly, it is possible to suppress the breakage of the insulator portion 52.

### (Fourth embodiment)

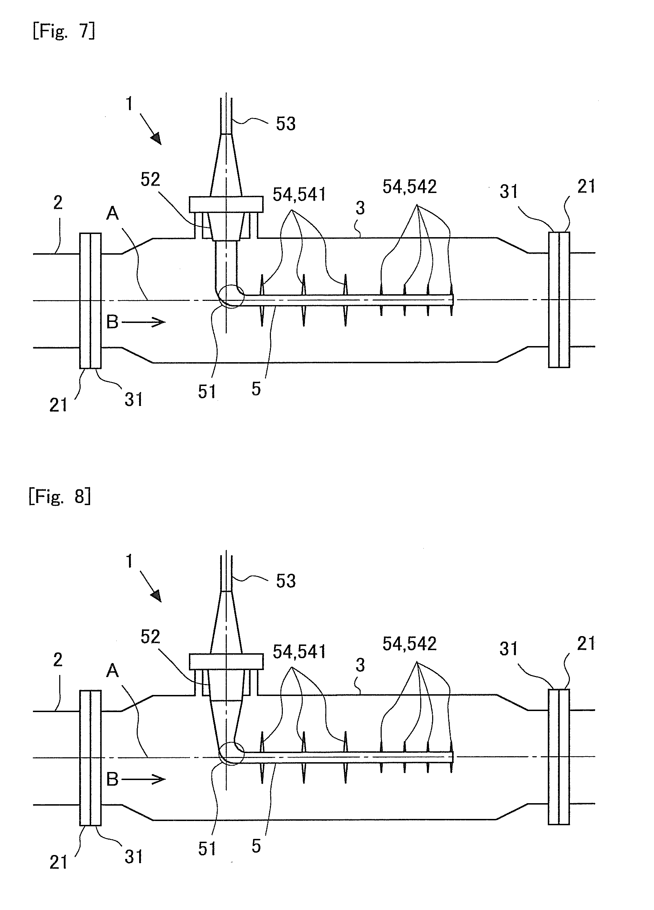

Fig. 7 shows a schematic arrangement of a particulate matter processing apparatus 1 according to this embodiment. Component or parts, which are the same as those of the embodiment described above, are designated by the same reference numerals, any explanation of which will be omitted.

In the particulate matter processing apparatus 1 according to this embodiment, the electrode 5, which is disposed on the side of the insulator portion 52 as compared with the bent portion 51, has the diameter of the cross section that is larger than the diameter of the cross section of the electrode 5 which is disposed on the side of the forward end as compared with the bent portion 51 (on the downstream side of the flow of the exhaust gas). Further, the diameter of the cross section is more decreased at positions nearer to the forward end side of the electrode 5 at the bent portion 51. That is, the thickness of the electrode 5 is changed at the bent portion 51.

In the particulate matter processing apparatus 1 constructed as described above, it is possible to decrease the field intensity at the bent portion 51. Accordingly, it is possible to improve the insulation performance. That is, if the protruding amount of the insulator portion 52 protruding into the exhaust gas is merely decreased, it is feared that the insulation performance may be deteriorated. However, it is possible to suppress the decrease in the insulation performance by changing the thickness of the electrode 5. Accordingly, it is possible to suppress the electric discharge caused by any portion other than the protruding portion 54. Therefore, it is possible to improve the reliability, and it is possible to facilitate the aggregation of PM.

### (Fifth embodiment)

Fig. 8 shows a schematic arrangement of a particulate matter processing apparatus 1 according to this embodiment. Component or parts, which are the same as those of the embodiment described above, are designated by the same reference numerals, any explanation of which will be omitted.

In the particulate matter processing apparatus 1 according to this embodiment, the electrode 5, which is disposed on the side of insulator portion 52 as compared with the bent portion 51, has the diameter of the cross section that is larger than the diameter of the cross section of the electrode 5 which is disposed on the forward end side as compared with the bent portion 51 (on the downstream side of the flow of the exhaust gas). Further, as for the portion of the electrode 5 ranging from the insulator portion 52 to the bent portion 51, the diameter of the cross section is more decreased at positions nearer to the bent portion 51. Further, in relation to the bent portion 51, the diameter of the cross section is more decreased at positions disposed nearer to the forward end side of the electrode 5. That is, the thickness of the electrode 5 is changed in the region ranging from the insulator portion 52 to the bent portion 51.

In the particulate matter processing apparatus 1 constructed as described above, it is possible to decrease the relative field intensity at the bent portion 51. Accordingly, it is possible to improve the insulation performance. Further, when the diameter of the cross section of the electrode 5 is increased in the vicinity of the insulator portion 52, it is thereby possible to especially decrease the field intensity at this portion. That is, any short circuit is easily formed in the vicinity of the insulator portion 52. However, it is possible to suppress the short circuit by decreasing the field intensity. Accordingly, it is possible to suppress the electric discharge caused by any portion other than the protruding portion 54. Therefore, it is possible to improve the reliability, and it is possible to facilitate the aggregation of PM.

### (Sixth embodiment)

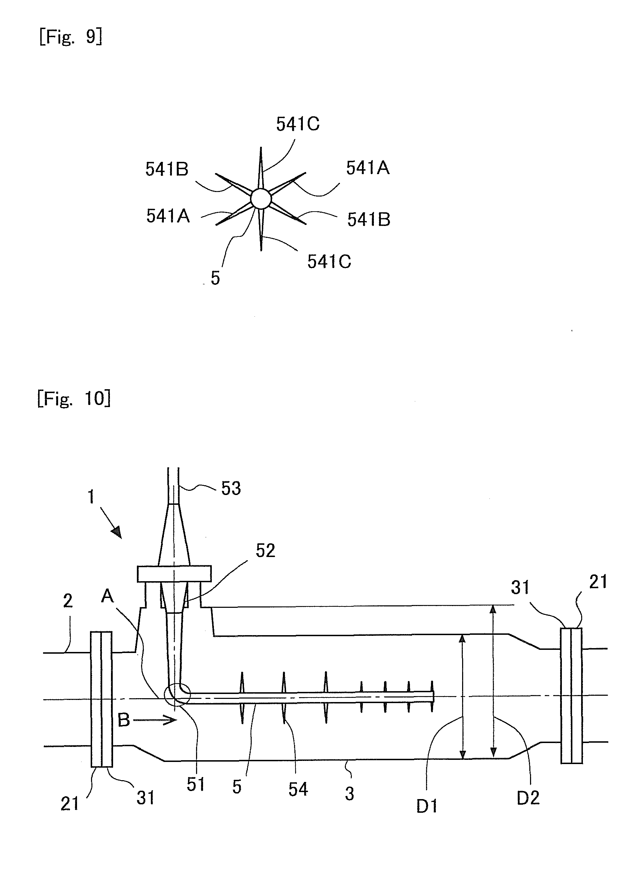

Fig. 9 shows an electrode 5 of a particulate matter processing apparatus 1 according to this embodiment as viewed from the downstream side of the flow of the exhaust gas. Component or parts, which are the same as those of the embodiment described above, are designated by the same reference numerals, any explanation of which will be omitted.

The electrode 5 shown in Fig. 9 is constructed to include protruding portions 541A (hereinafter referred to as "protruding portions 541A of the first array") which are installed at positions having the shortest distance from the bent portion 51, protruding portions 541B (hereinafter referred to as "protruding portions 541B of the second array") which are installed at positions of the second shortest distance from the bent portion 51, and protruding portions 541C (hereinafter referred to as "protruding portions 541C of the third array) which are installed at positions of the third shortest distance from the bent portion 51. That is, the protruding portions 541A of the first array, the protruding portions 541B of the second array, and the protruding portions 541C of the third array are installed from the upstream side while providing the spacings in the flow direction of the exhaust gas.

Further, the two protruding portions 541A of the first array are provided, and they are mutually directed in the opposite directions while interposing the central axis A. That is, the two protruding portions 541A of the first array are provided while giving an angle of 180 degrees about the center of the central axis A. The two protruding portions 541B of the second array are also provided, and they are mutually directed in the opposite directions while interposing the central axis A. Further, the protruding portions 541A of the first array and the protruding portions 541B of the second array are arranged while being deviated by 60 degrees about the center of the central axis A. Further, the two protruding portions 541C of the third array are also provided, and they are mutually directed in the opposite directions while interposing the central axis A. The protruding portions 541A of the first array and the protruding portions 541C of the third array are arranged while being deviated by 120 degrees about the center of the central axis A. That is, the protruding portions 541B of the second array and the protruding portions 541C of the third array are arranged while being deviated by 60 degrees about the center of the central axis A. Accordingly, the arrangement appears such that the protruding portions 541A, 541B, 541C are provided at every 60 degrees about the center of the central axis A as viewed from the downstream side of the flow of the exhaust gas.

In this way, the arrangement is made while deviating the angle about the central axis at the positions disposed on the more downstream side as directed from the bent portion 51 to the protruding portions 541A of the first array, the protruding portions 541B of the second array, and the protruding portions 541C of the third array. Accordingly, it is possible to uniformize the spatial distribution of the electric field. Therefore, it is possible to facilitate the aggregation of PM. When other protruding portions are further provided on the downstream side, the consideration may be made in the same manner as described above. It is also allowable that the respective protruding portions are arranged in a radial form as viewed from the downstream side of the flow of the exhaust gas. Further, it is also allowable that the protruding portion is more shortened and the spacing in the flow direction of the exhaust gas between the protruding portions is more shortened at positions disposed on the more downstream side of the flow of the exhaust gas.

### (Seventh embodiment)

Fig. 10 shows a schematic arrangement of a particulate matter processing apparatus 1 according to this embodiment. Component or parts, which are the same as those of the embodiment described above, are designated by the same reference numerals, any explanation of which will be omitted.

In the particulate matter processing apparatus 1 according to this embodiment, the diameter D1 of the housing 3 around the protruding portion 54 is smaller than the diameter D2 of the housing 3 at the portion at which the insulator portion 52 is provided. Accordingly, the exhaust gas hardly flows around the insulator portion 52. It is also allowable that the distance between the central axis A and the housing 3 at the portion at which the insulator portion 52 is provided is longer than the distance between the central axis A and the housing 3 around the protruding portion 54.

In the particulate matter processing apparatus 1 constructed as described above, it is possible to suppress such a situation that the water droplets and the substance discharged from the internal combustion engine (for example, combustion product) pass through the surroundings of the insulator portion 52. That is, it is possible to suppress such a situation that the water droplets and the combustion product adhere to the insulator portion 52 and the insulation performance is deteriorated. Accordingly, it is possible to suppress the electric discharge caused by any portion other than the protruding portion 54. Therefore, it is possible to improve the reliability, and it is possible to facilitate the aggregation of PM.

### (Eighth embodiment)

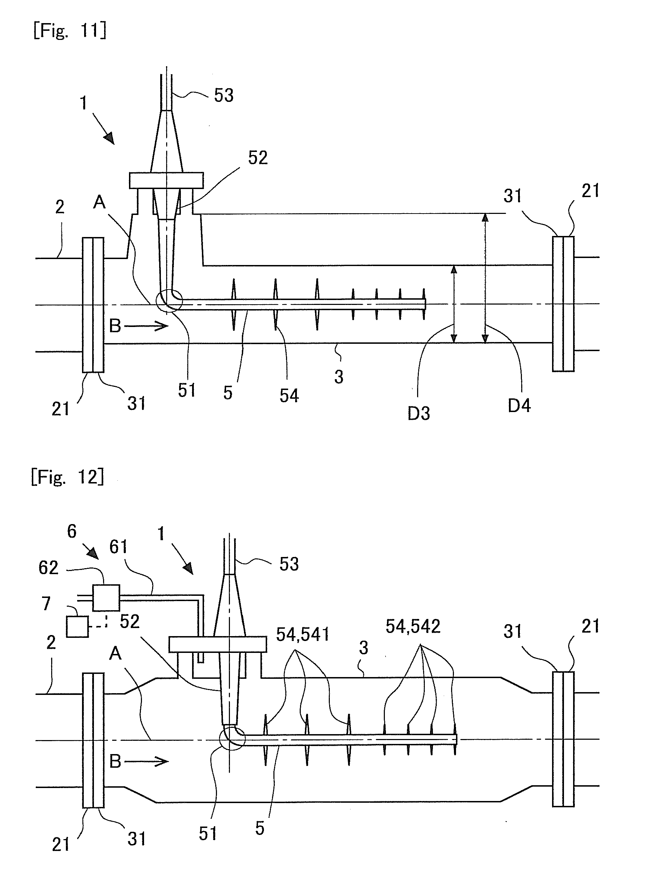

Fig. 11 shows a schematic arrangement of a particulate matter processing apparatus 1 according to this embodiment. Component or parts, which are the same as those of the embodiment described above, are designated by the same reference numerals, any explanation of which will be omitted.

In the particulate matter processing apparatus 1 according to this embodiment, the diameter D3 of the housing 3 around the protruding portion 54 is small as compared with the arrangement of the seventh embodiment. Therefore, the diameter D3 of the housing 3 around the protruding portion 54 is much smaller than the diameter D4 of the housing 3 at the portion at which the insulator portion 52 is provided. Accordingly, the exhaust gas hardly flows around the insulator portion 52, and the field intensity around the protruding portion 54 becomes relatively large. Therefore, it is possible to further suppress the decrease in the insulation performance, and it is possible to further facilitate the aggregation of PM. Accordingly, it is possible to suppress the electric discharge caused by any portion other than the protruding portion 54. Therefore, it is possible to improve the reliability, and it is possible to facilitate the aggregation of PM.

### (Ninth embodiment)

Fig. 12 shows a schematic arrangement of a particulate matter processing apparatus 1 according to this embodiment. Component or parts, which are the same as those of the embodiment described above, are designated by the same reference numerals, any explanation of which will be omitted.

In the particulate matter processing apparatus 1 according to this embodiment, an air supply unit 6 is provided, which supplies the air to the surroundings of the insulator portion 52. The air supply unit 6 is constructed to include an air supply tube 61 and a pump 62. The pump 62 is controlled by the control unit 7. When the pump 62 is operated, the air is discharged from the pump 62. The air flows through the air supply tube 61, and the air is supplied to the surroundings of the insulator portion 52. It is also allowable that the air is supplied to the surroundings of any other electric insulation member provided around the insulator portion 52.

In this arrangement, when the air is supplied to the surroundings of the insulator portion 52, it is possible to suppress the adhesion of the water droplets and the combustion product to the insulator portion 52. Therefore, it is possible to suppress the decrease in the insulation performance. Accordingly, it is possible to suppress the electric discharge caused by any portion other than the protruding portion 54. Therefore, it is possible to improve the reliability, and it is possible to facilitate the aggregation of PM.

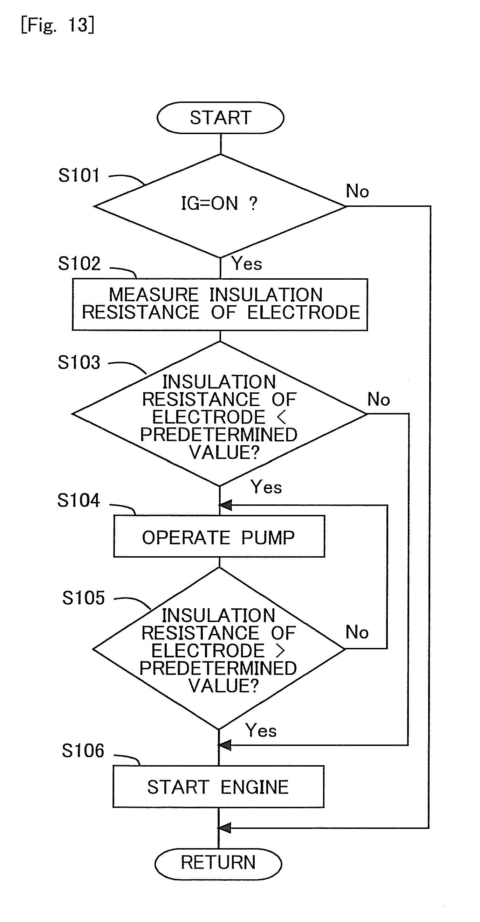

Fig. 13 shows a flow chart illustrating a control flow of the air supply unit 6 according to this embodiment. This routine is executed by the control unit 7 every time when a predetermined time elapses.

In Step S101, it is judged whether or not an IG switch is turned ON. The IG switch is the switch which is to be turned ON when the driver starts the internal combustion engine. That is, in this step, it is judged whether or not the request is given to start the internal combustion engine. If the affirmative judgment is made in Step S101, the routine proceeds to Step S102. On the other hand, if the negative judgment is made, this routine is completed.

In Step S102, the electric insulation resistance of the electrode 5 is measured. In this procedure, if the water droplet or the like adheres to the electrode 5, the electric insulation resistance is lowered. Therefore, when the decrease in the electric insulation resistance is measured, it is possible to judge whether or not the water droplet or the like adheres to the electrode 5. For example, when a predetermined voltage is applied to the electrode 5, and the current provided in this situation is measured, then it is possible to detect the electric insulation resistance. After the completion of the process of Step S102, the routine proceeds to Step S103.

In Step S103, it is judged whether or not the electric insulation resistance of the electrode 5 is less than a predetermined value. The predetermined value referred to herein is the lower limit value of the electric insulation resistance to be provided when the water droplet or the like does not adhere. It is also allowable that the predetermined value is the value to be used in order to judge the decrease in the electric insulation resistance. The predetermined value is previously determined, for example, by an experiment. If the affirmative judgment is made in Step S103, it is considered that the water droplet or the like adheres. Therefore, the routine proceeds to Step S104. On the other hand, if the negative judgment is made in Step S103, it is considered that the water droplet or the like does not adhere. Therefore, the routine proceeds to Step S106.

In Step S104, the pump 62 is operated. That is, the air is supplied to the surroundings of the insulator portion 52, and the water droplet or the like is removed. After the completion of the process of Step S104, the routine proceeds to Step S105.

In Step S105, it is judged whether or not the electric insulation resistance is larger than a predetermined value. The predetermined value referred to herein may be the same as the predetermined value used in Step S103. It is also allowable that the predetermined value is the value to judge whether or not the electric insulation resistance is recovered. The predetermined value is previously determined, for example, by an experiment. If the affirmative judgment is made in Step S105, the water droplet or the like is removed. Therefore, the routine proceeds to Step S106. On the other hand, if the negative judgment is made in Step S105, the water droplet or the like remains. Therefore, the routine returns to Step S104, and the supply of the air is continued.

In Step S106, the internal combustion engine is started. That is, the internal combustion engine is started in the state in which the water droplet or the like does not adhere to the electrode 5. After the completion of the process of Step S106, this routine is completed.

In this embodiment, when the water droplet or the like does not adhere to the electrode 5, the air may be supplied from the pump 62 to the exhaust gas purification catalyst. Accordingly, it is possible to facilitate the oxidation of HC and CO contained in the exhaust gas.

### (Tenth embodiment)

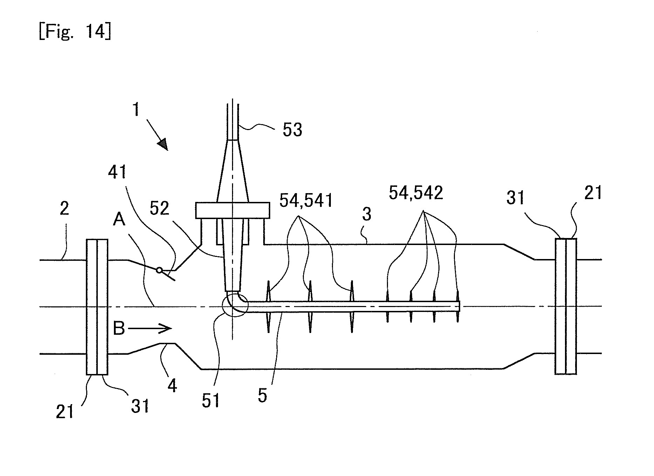

Fig. 14 shows a schematic arrangement of a particulate matter processing apparatus 1 according to this embodiment. Component or parts, which are the same as those of the embodiment described above, are designated by the same reference numerals, any explanation of which will be omitted.

In the particulate matter processing apparatus 1 according to this embodiment, a throttle portion 4, at which the cross-sectional area of the passage for the exhaust gas is decreased, is formed for the housing 3 on the upstream side from the insulator portion 52. Further, a check valve 41 is provided for the throttle portion 4. The gas, which intends to flow from the outside into the inside of the housing 3, is allowed to pass through the check valve 41, while the gas, which intends to flow from the inside to the outside of the housing 3, is shut off by the check valve 41.

In the particulate matter processing apparatus 1 constructed as described above, the flow rate of the gas is increased when the gas, which is discharged from the internal combustion engine, passes through the throttle portion 4. Accordingly, the check valve 41 is opened, and the air is introduced into the housing 3. The position, at which the check valve 41 is provided, is determined so that the air arrives at the insulator portion 52. In this way, even when any pump is not provided, it is possible to supply the air to the surroundings of the insulator portion 52. Therefore, it is possible to suppress the decrease in the insulation performance. Accordingly, it is possible to suppress the electric discharge caused by any portion other than the protruding portion 54. Therefore, it is possible to improve the reliability, and it is possible to facilitate the aggregation of PM.

### (Eleventh embodiment)

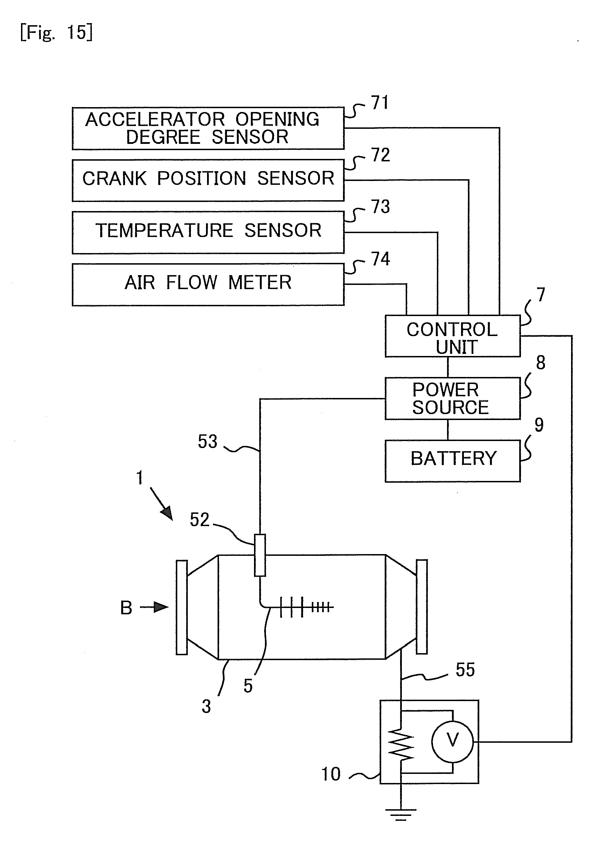

Fig. 15 shows a schematic arrangement of a particulate matter processing apparatus 1 according to this embodiment. Component or parts, which are the same as those of the embodiment described above, are designated by the same reference numerals, any explanation of which will be omitted.

In this embodiment, the electrode 5 is connected to a power source 8 via an electric wire 53. The power source 8 applies the electricity to the electrode 5, and the power source 8 can change the application voltage. The power source 8 is connected to a control unit 7 and a battery 9 via the electric wire. The control unit 7 controls the voltage which is applied to the electrode 5 by the power source 8.

Further, a ground side electric wire 55 is connected to the housing 3. The housing 3 is grounded via the ground side electric wire 55. A detecting unit 10, which detects the current allowed to pass through the ground side electric wire 55, is provided for the ground side electric wire 55. The detecting unit 10 may be an ammeter. For example, the detecting unit 10 detects the current by measuring the electric potential difference between the both ends of a resistor provided at an intermediate portion of the ground side electric wire 55. The detecting unit 10 is connected to the control unit 7 via an electric wire. Thus, the current, which is detected by the detecting unit 10, is inputted into the control unit 7.

An accelerator opening degree sensor 71, a crank position sensor 72, a temperature sensor 73, and an air flow meter 74 are connected to the control unit 7. The electric signal, which corresponds to the amount obtained by pedaling an accelerator pedal by a driver of a vehicle carried with the internal combustion engine, is outputted by the accelerator opening degree sensor 71 to detect the engine load. The crank position sensor 72 detects the number of revolutions of the engine. The temperature sensor 73 detects the temperature of the internal combustion engine by detecting the temperature of the cooling water of the internal combustion engine or the temperature of the lubricating oil. The air flow meter 74 detects the intake air amount of the internal combustion engine.

In the particulate matter processing apparatus 1 constructed as described above, the electrons are released from the electrode 5 by applying the negative DC high voltage from the power source 8 to the electrode 5. That is, the electrons are released from the electrode 5 by lowering the electric potential of the electrode 5 as compared with the housing 3. Thus, PM contained in the exhaust gas can be negatively electrified with the electrons. The negatively electrified PM is moved in accordance with the Coulomb force and the gas flow. Further, when PM arrives at the housing 3, the electrons, with which PM is negatively electrified, are released to the housing 3. PM, from which the electrons have been released to the housing 3, are aggregated, and the particulate diameter is increased. Further, when PM is aggregated, the number of particulates of PM is decreased. That is, when the voltage is applied to the electrode 5, then it is possible to increase the particulate diameter of PM, and it is possible to decrease the number of particulates of PM.

In the meantime, when the negative voltage, which is applied to the electrode 5, is increased, a larger amount of electrons are released from the electrode 5. Therefore, it is possible to further decrease the number of particulates of PM. However, if the application voltage to the electrode 5 is excessively increased, the strong electric discharge such as the corona discharge and the arc discharge may be caused. If the strong electric discharge is caused as described above, PM is made fine and minute by the high speed electrons. Therefore, in order to decrease the number of particulates of PM, it is appropriate that the voltage is regulated to a voltage which is lower than the voltage at which the strong electric discharge such as the corona discharge or the like is caused.

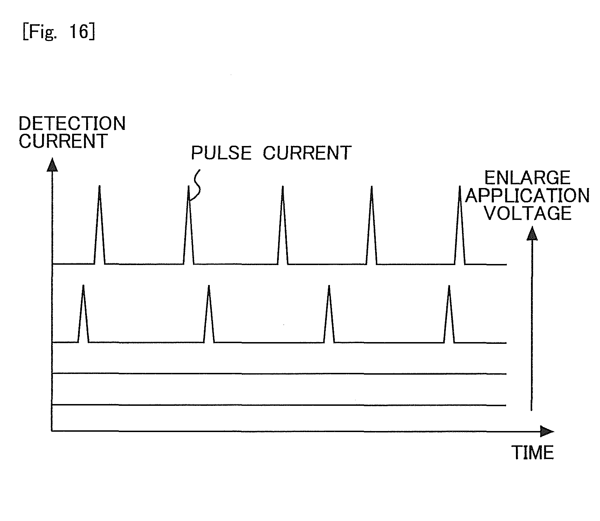

In this procedure, if the strong electric discharge is caused by the electrode 5, the current, which passes through the electrode 5, is suddenly raised and then immediately lowered. Fig. 16 shows the transition of the current detected by the detecting unit 10 in relation to each of the application voltages. The larger the application voltage is, the larger the current detected by the detecting unit 10 is. Further, the current, which is detected when the application voltage is relatively small, is substantially constant. When the current is substantially constant, any strong electric discharge is not generated. However, PM is negatively electrified by the electrons released from the electrode 5, and PM releases the electrons to the housing 3. Therefore, the current is detected. That is, even when any strong electric discharge such as the corona discharge or the like is not generated, it is possible to aggregate PM.

On the other hand, when the application voltage becomes relatively large, then the current detected by the detecting unit 10 is increased, and the pulse current is generated. Further, the larger the application voltage is, the higher the frequency of generation of the pulse current is. The pulse current is generated by the strong electric discharge such as the corona discharge or the like. Whether or not the pulse current is generated is judged by the control unit 7. That is, in this embodiment, the control unit 7 corresponds to the judging unit of the present invention.

In view of the above, in this embodiment, when the pulse current is generated, the control unit 7 operates the power source 8 so that the application voltage is made smaller than that provided at the present point in time. Accordingly, the generation of the pulse current is suppressed, and the increase in the number of particulates of PM is suppressed. On the other hand, the application voltage is increased until the pulse current is generated. Accordingly, it is possible to raise the application voltage as high as possible. Therefore, it is possible to further decrease the number of particulates of PM. It is also appropriate that the sign of the generation of the pulse current is read from the current before the pulse current is generated, and the application voltage is decreased before the pulse current is generated.

For example, when the application voltage is subjected to the feedback control, it is thereby possible to raise the application voltage as high as possible within a range in which the pulse current is not generated. Accordingly, it is possible to further facilitate the aggregation of PM. Therefore, it is possible to further decrease the number of particulates of PM.

### (Twelfth embodiment)

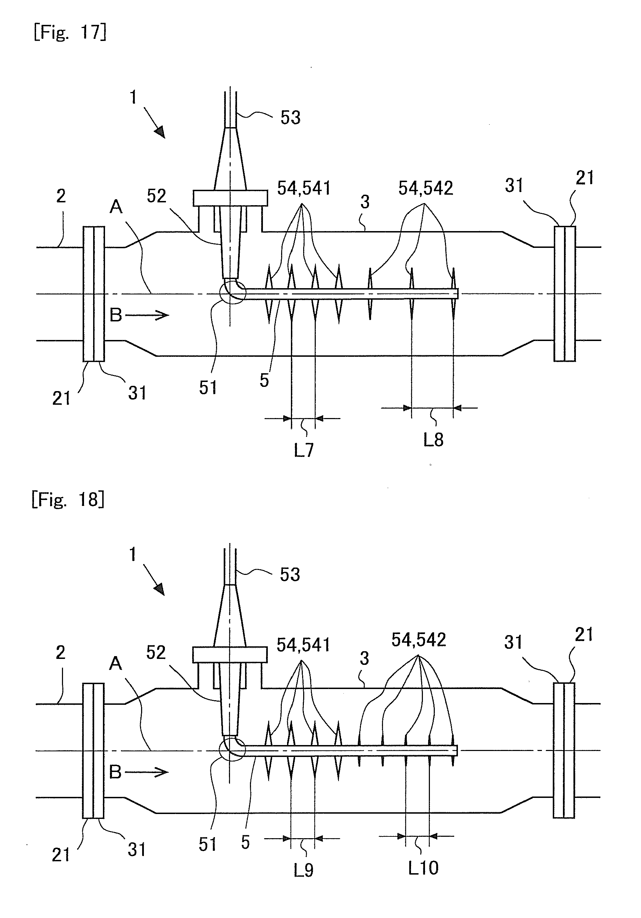

Fig. 17 shows a schematic arrangement of a particulate matter processing apparatus 1 according to this embodiment. Component or parts, which are the same as those of the embodiment described above, are designated by the same reference numerals, any explanation of which will be omitted.

In the particulate matter processing apparatus 1 according to this embodiment, the field intensity is changed by changing the thickness of the protruding portion 54.

Further, in this embodiment, the diameter of the cross section of the root of the protruding portion 541 disposed on the upstream side is made larger than the diameter of the cross section of the root of the protruding portion 542 disposed on the downstream side. That is, the protruding portion 541 disposed on the upstream side is thicker than the protruding portion 542 disposed on the downstream side. Further, the installation spacing L7 in the flow direction of the exhaust gas between the protruding portions 541 is made relatively short in relation to the protruding portions 541 disposed on the upstream side. The installation spacing L8 in the flow direction of the exhaust gas between the protruding portions 542 is made relatively long in relation to the protruding portions 542 disposed on the downstream side. All of the protruding portions 54 have the same length. Therefore, the distance from the protruding portion 54 to the wall surface of the housing 3 is also the same in relation to all of the protruding portions 54.

As shown in Fig. 17, for example, the first to fourth nearest protruding portions 541, which are referred to in the flow direction of the exhaust gas from the side near to the bent portion 51, have the diameters of the roots that are larger than the diameters of the roots of the protruding portions 542 which are disposed on the more downstream side. The diameter of the root is the diameter provided at the portion at which the diameter is maximized in relation to each of the protruding portions 54.

It is also appropriate that the diameters of the protruding portions 541 existing in a region of less than a predetermined distance from the bent portion 51 are larger than the diameters of the protruding portions 542 existing in a region of not less than the predetermined distance from the bent portion 51. Further, it is also appropriate that all of the lengths of the protruding portions 541 existing in a region of less than a predetermined distance from the bent portion 51 are identical, or the lengths are shorter at positions on the more downstream side. Further, it is also appropriate that all of the lengths of the protruding portions 542 existing in a region of not less than the predetermined distance from the bent portion 51 are identical, or the lengths are shorter at positions on the more downstream side.

It is also appropriate that the spacing in the flow direction of the exhaust gas between the protruding portions 542 existing in a region of not less than a predetermined distance from the bent portion 51 is shorter than the spacing in the flow direction of the exhaust gas between the protruding portions 541 existing in a region of less than the predetermined distance from the bent portion 51. Further, it is also appropriate that the larger the diameter of the root of the protruding portion 54 is, the shorter the spacing in the flow direction of the exhaust gas is.

In this arrangement, the larger the diameter of the cross section of the root of the protruding portion 54 is, i.e., the thicker the protruding portion 54 is, the more increased the rigidity of the protruding portion 54 is. The relatively high rigidity is required for the protruding portion 541 provided on the relatively upstream side of the flow of the exhaust gas. Therefore, it is conceived that the protruding portion 541 disposed on the upstream side is thickened. On the other hand, when the protruding portion 54 is thickened, the field intensity is lowered. Therefore, if the protruding portion 541 disposed on the upstream side is merely thickened, it is feared that the field intensity on the upstream side may be lowered.
In relation thereto, when the installation spacing in the flow direction of the exhaust gas between the protruding portions 541 disposed on the upstream side is shortened, it is thereby possible to suppress the decrease in the field intensity. That is, it is possible to more reliably electrify PM by means of the protruding portions 541 disposed on the upstream side.

Further, it is also allowable that the protruding portion 542 disposed on the downstream side in the flow of the exhaust gas has the low rigidity as compared with the protruding portion 541 disposed on the upstream side. Therefore, it is possible to relatively thin the protruding portion 542 disposed on the downstream side. Further, when the protruding portion 542 disposed on the downstream side is relatively thinned, the field intensity is thereby raised. Therefore, it is possible to lengthen the installation spacing in the flow direction of the exhaust gas between the protruding portions 542 disposed on the downstream side. In this way, it is possible to relatively thin the protruding portion 542 disposed on the downstream side, and it is possible to lengthen the setting spacing in the flow direction of the exhaust gas between the protruding portions 542 disposed on the downstream side. Therefore, it is possible to reduce the mass in the vicinity of the forward end of the electrode 5 . Accordingly, it is possible to suppress the deformation and the breakage of the electrode while facilitating the aggregation of PM.

### (Thirteenth embodiment)

Fig. 18 shows a schematic arrangement of a particulate matter processing apparatus 1 according to this embodiment. Component or parts, which are the same as those of the embodiment described above, are designated by the same reference numerals, any explanation of which will be omitted.

In the particulate matter processing apparatus 1 according to this embodiment, the field intensity is changed by changing the thickness of the protruding portion 54 and the length of the protruding portion 54.

Further, in this embodiment, the diameter of the cross section of the root of the protruding portion 541 disposed on the upstream side is larger than the diameter of the cross section of the root of the protruding portion 542 disposed on the downstream side. That is, the protruding portion 541 disposed on the upstream side is thicker than the protruding portion 542 disposed on the downstream side. Further, the length of the protruding portion 542 disposed on the downstream side is shorter than the length of the protruding portion 541 disposed on the upstream side. The installation spacing L9 in the flow direction of the exhaust gas between the protruding portions 541 disposed on the upstream side is the same as the installation spacing L10 in the flow direction of the exhaust gas between the protruding portions 542 disposed on the downstream side.

As shown in Fig. 18, for example, the first to fourth nearest protruding portions 541, which are disposed in the flow direction of the exhaust gas from the side near to the bent portion 51, have the diameters of the roots that are larger than the diameters of the roots of the protruding portions 542 which are disposed on the more downstream side therefrom.

It is also appropriate that the diameters of the protruding portions 541 existing in a region of less than a predetermined distance from the bent portion 51 are larger than the diameters of the protruding portions 542 existing in a region of not less than the predetermined distance from the bent portion 51. Further, it is also appropriate that all of the lengths of the protruding portions 541 existing in a region of less than a predetermined distance from the bent portion 51 are identical, or the lengths are shorter at positions on the more downstream side. Further, it is also appropriate that all of the lengths of the protruding portions 542 existing in a region of not less than the predetermined distance from the bent portion 51 are identical, or the lengths are more shortened at positions on the more downstream side.

It is also appropriate that the lengths of the protruding portions 542 existing in a region of not less than a predetermined distance from the bent portion 51 are shorter than the lengths of the protruding portions 541 existing in a region of less than the predetermined distance from the bent portion 51.

In this arrangement, it is also appropriate that the protruding portion 542 disposed on the downstream side of the flow of the exhaust gas has the low rigidity as compared with the protruding portion 541 disposed on the upstream side. Therefore, it is possible to relatively thin the protruding portion 542 disposed on the downstream side. Further, the length of the protruding portion 542 disposed on the downstream side is shortened as compared with the protruding portion 541 disposed on the upstream side. Therefore, it is possible to reduce the mass on the forward end side of the electrode 5, i.e., on the downstream end side of the electrode 5. Further, it is possible to suppress the decrease in the field intensity by relatively shortening the spacing in the flow direction of the exhaust gas between the protruding portions 542 disposed on the downstream side.

In this way, it is possible to reduce the mass in the vicinity of the forward end of the electrode 5 by relatively thinning and shortening the protruding portion 542 disposed on the downstream side and shortening the spacing in the flow direction of the exhaust gas between the protruding portions 542 disposed on the downstream side. Accordingly, it is possible to suppress the deformation and the breakage of the electrode while uniformizing the field intensity.

### (Fourteenth embodiment)

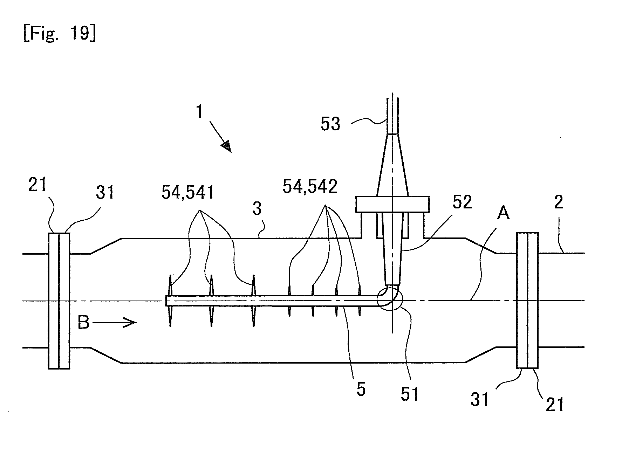

Fig. 19 shows a schematic arrangement of a particulate matter processing apparatus 1 according to this embodiment. In the embodiment described above, the electrode 5 is bent toward the downstream side of the flow of the exhaust gas. However, in this embodiment, the electrode 5 is bent toward the upstream side.

Further, the length of the protruding portion 541 disposed on the upstream side is made longer than the length of the protruding portion 542 disposed on the downstream side. Further, the installation spacing in the flow direction of the exhaust gas between the protruding portions 541 disposed on the upstream side is made longer than the installation spacing in the flow direction of the exhaust gas between the protruding portions 542 disposed on the downstream side. Even in the case of the arrangement as described above, the field intensity on the upstream side can be made larger than the field intensity on the downstream side. Therefore, it is possible to more reliably electrify PM on the upstream side on which the field intensity is relatively large. Further, when PM, which is electrified on the upstream side, is allowed to flow to the downstream side on which the field intensity is relatively small, PM is gently moved to the wall surface of the housing 3. Accordingly, the mutual aggregation of PM is facilitated. Therefore, it is possible to enhance the effect to reduce the number of particulates of PM.

Further, when the electrode 5 is bent toward the upstream side of the flow of the exhaust gas, PM hardly adheres to the insulator portion 52. That is, PM can be electrified on the upstream side from the insulator portion 52. Therefore, PM is directed or moved toward the inner circumferential surface of the housing 3. Therefore, the amount of PM colliding with the insulator portion 52 is decreased. Therefore, PM hardly adheres to the insulator portion 52. However, when the electrode 5 is bent toward the upstream side of the flow of the exhaust gas, the electrode 5 tends to be deformed on account of the force received from the flow of the exhaust gas. Further, the influence is easily exerted by the mass of the protruding portion 54. Therefore, this arrangement is suitable for such a case that the electrode 5 is short. On the other hand, when the electrode 5 is bent toward the downstream side of the flow of the exhaust gas, then PM tends to adhere to the insulator portion 52, but the electrode 5 is hardly deformed even when the electrode 5 receives the force from the flow of the exhaust gas. Therefore, the durability and the reliability are high, and it is possible to lengthen the electrode 5.

### PARTS LIST

1: particulate matter processing apparatus, 2: exhaust gas passage, 3: housing, 5: electrode, 6: air supply unit, 21: flange, 31: flange, 51: bent portion, 52: insulator portion, 53: electric wire, 54: protruding portion.

## Claims

1. A particulate matter processing apparatus comprising an electrode which is provided in an exhaust gas passage of an internal combustion engine, which extends from a wall surface of the exhaust gas passage toward an inner side of the exhaust gas passage, which is bent at a bent portion toward an upstream side or a downstream side in a flow direction of an exhaust gas, and which extends toward the upstream side or the downstream side in the flow direction of the exhaust gas, wherein:
the electrode is formed so that a field intensity, which is provided between the electrode and the wall surface of the exhaust gas passage on the upstream side, is larger than that provided on the downstream side.

2. The particulate matter processing apparatus according to claim 1, further comprising:
a power source which supplies an electric power to the electrode, wherein:
the power source supplies the electric power to one portion of the electrode to apply an identical voltage to the entire electrode.

3. The particulate matter processing apparatus according to claim 1 or 2, wherein:
the electrode is provided with a plurality of protruding portions which extend toward a wall surface side of the exhaust gas passage in a direction perpendicular to the flow direction of the exhaust gas at a part extending toward the upstream side or the downstream side of the flow direction of the exhaust gas; and
the field intensity between the electrode and the wall surface of the exhaust gas passage is changed by changing at least one of a distance between the protruding portion and the wall surface of the exhaust gas passage or an installation spacing in the flow direction of the exhaust gas between the protruding portions, between the upstream side and the downstream side of the flow of the exhaust gas.

4. The particulate matter processing apparatus according to claim 3, wherein the exhaust gas passage, which is disposed around the electrode, has an identical inner diameter, and the field intensity between the electrode and the wall surface of the exhaust gas passage is changed by changing at least one of a length of the protruding portion and the installation spacing in the flow direction of the exhaust gas between the protruding portions.

5. The particulate matter processing apparatus according to claim 4, wherein:
the electrode extends from the bent portion toward the downstream side in the flow direction of the exhaust gas; and
a length of the protruding portion is short and the installation spacing in the flow direction of the exhaust gas between the protruding portions is short at a portion which is disposed far from the bent portion as compared with a portion which is disposed near to the bent portion.

6. The particulate matter processing apparatus according to claim 4, wherein:
the electrode extends from the bent portion toward the upstream side in the flow direction of the exhaust gas; and
a length of the protruding portion is long and the installation spacing in the flow direction of the exhaust gas between the protruding portions is long at a portion which is disposed far from the bent portion as compared with a portion which is disposed near to the bent portion.

7. The particulate matter processing apparatus according to any one of claims 3 to 6, wherein a thickness of the protruding portion is changed between the upstream side and the downstream side of the flow of the exhaust gas.

8. The particulate matter processing apparatus according to any one of claims 1 to 7, further comprising:
a detecting unit which detects a current allowed to pass through the electrode;
a judging unit which judges whether or not a pulse current is generated in the current detected by the detecting unit; and
a control unit which reduces an application voltage applied to the electrode as compared with that provided at a present point in time if it is judged by the judging unit that the pulse current is generated.
